# EUROPEAN PATENT APPLICATION

(11) **EP 4 518 271 A1**
(43) Date of publication of application: **05.03.2025**
(21) Application number: 24194855.3
(22) Date of filing: 16.08.2024
(51) Int. Cl.: H04L 41/0853, H04W 36/00, H04W 24/02, H04W 88/12

(54) **PROXIMAL COMPUTING CAPABILITY AND AVAILABILITY TABLE**

(30) Priority: 04.09.2023 FI 20235984
(71) Applicant: Nokia Solutions and Networks Oy, 02610 Espoo (FI)
(72) Inventor: CHIRIYAMKANDATH ANTONY, Daiju, Bangalore (IN); GAJIC, Borislava, Unterhaching (DE)
(74) Representative: Nokia EPO representatives

(57) **Abstract**

Various examples of embodiments described herein relate to methods and apparatuses for a proximal computing capability and availability table. One such example of an embodiment relates to a method that includes retrieving information comprising at least one of configuration management, CM, data and performance management, PM, data of predetermined cloud based Radio Access network entities or functions, or resource types in the predetermined cloud based Radio Access network entities or functions, or capabilities of resource types in the predetermined cloud based Radio Access network entities or functions, or location information of the predetermined cloud based Radio Access network entities or functions; from the retrieved information and from among the predetermined cloud based Radio Access network entities or functions, deriving a proximal computing capability table for a source cloud based Radio Access network entity or function in a proximity of target cloud based Radio Access network entities or functions, the derivation based on a proximity analysis of the predetermined cloud based Radio Access network entities or functions in relation to the source cloud based Radio Access network entity or function and further based on a capability analysis of computing resource types in the target cloud based Radio Access network entities or functions in the proximity of the source cloud based Radio Access network entity or function; and providing the derived proximal computing capability table, wherein the proximal computing capability table is a neighbour relation table indicative of computing resources types and/or capability of compute resource types of the target cloud based Radio Access network entities or functions in the proximity of the source cloud based Radio Access network entity or function.

## Description

### Technical Field

Various examples of embodiments described herein relate to a method and an apparatus for a proximal computing capability and availability table.

### Background

Over time, an increasing extension of communication networks has taken place all over the world. Various organizations, such as the European Telecommunications Standards Institute (ETSI), the 3^{rd} Generation Partnership Project (3GPP), Telecoms & Internet converged Services & Protocols for Advanced Networks (TISPAN), the International Telecommunication Union (ITU), 3^{rd} Generation Partnership Project 2 (3GPP2), Internet Engineering Task Force (IETF), the IEEE (Institute of Electrical and Electronics Engineers), the WiMAX Forum and the like are working on standards or specifications for telecommunication networks and access environments.

By way of example, 3GPP defines 5G Core Network Function's (NF's) interfaces and relevant Application Programming Interfaces (APIs) for each NF to communicate between N Fs.

### SUMMARY

Various examples of embodiments described in the subject disclosure provide certain advantages, for example in the form of one or more improvements that are either explicitly described herein or otherwise apparent to a person skilled in the art from the subject disclosure. Hence, at least some examples of embodiments of the subject disclosure aim to provide (or otherwise contribute to) at least part of the aforementioned advantages and improvements.

Various aspects of examples of embodiments of the subject disclosure are set forth in the claims and pertain to methods, apparatuses and computer program products in the context of a proximal computing capability and availability table.

At least some of aforementioned advantages and improvements may be achieved through the methods, apparatuses and non-transitory storage media as specified in the claims. Further advantages and improvements may be achieved through the methods, apparatuses and non-transitory storage media set forth in respective dependent claims.

Insofar, according to various examples of embodiments, an apparatus may comprise: at least one processor; and at least one memory storing instructions that, when executed by the at least one processor, may cause the apparatus at least to: retrieve information comprising at least one of configuration management, CM, data and performance management, PM, data of predetermined cloud based Radio Access network entities or functions, or resource types in the predetermined cloud based Radio Access network entities or functions, or capabilities of resource types in the predetermined cloud based Radio Access network entities or functions, or location information of the predetermined cloud based Radio Access network entities or functions; from the retrieved information and from among the predetermined cloud based Radio Access network entities or functions, derive a proximal computing capability table for a source cloud based Radio Access network entity or function in a proximity of target cloud based Radio Access network entities or functions, the derivation based on a proximity analysis of the predetermined cloud based Radio Access network entities or functions in relation to the source cloud based Radio Access network entity or function and further based on a capability analysis of computing resource types in the target cloud based Radio Access network entities or functions in the proximity of the source cloud based Radio Access network entity or function; and provide the derived proximal computing capability table, wherein the proximal computing capability table is a neighbour relation table indicative of computing resources types and/or capability of compute resource types of the target cloud based Radio Access network entities or functions in the proximity of the source cloud based Radio Access network entity or function.

According to various examples of embodiments, the apparatus may further be caused to retrieve further information comprising at least one of PM data of the predetermined cloud based Radio Access network entities or functions, or an availability of computing resources types in the predetermined cloud based Radio Access network entities or functions; from the retrieved further information and the proximal computing capability table, derive a proximal computing availability table for the source cloud based Radio Access network entity or function in the proximity of the target cloud based Radio Access network entities or functions; and provide the derived proximal computing availability table, wherein the proximal computing availability table is a dynamic neighbour relation table indicative of current availability of computing resources types of the target cloud based Radio Access network entities or functions in the proximity of the source cloud based Radio Access network entity or function.

According to various examples of embodiments, the resource types indicated by the proximal computing capability table may refer to at least one of support for a neural processing unit, support for a deep processing unit, support for a graphical processing unit, support for a Content-Addressable Memory, CAM, support for a Artificial Intelligence, Al, accelerator, or, support for a Quantum Processing Unit, QPU; and/or wherein the capability of resource types indicated by the proximal computing capability table may refer to at least one of supported CPU frequencies, supported types of Al algorithms, supported Graphics Memory, supported number of Ray Tracing Cores, or supported Al & Tensor Cores.

According to various examples of embodiments, the current availability indicated by the proximal computing availability table may comprise a predicted availability of the computing type resources for predetermined time periods.

According to various examples of embodiments, the proximal computing capability table may comprise the following information: target node identifiers for the target cloud based Radio Access network entities or functions; and/or resource types supported by the target cloud based Radio Access network entities or functions; and/or capabilities of resource types; and/or a last update time.

According to various examples of embodiments, the proximal computing availability table may comprise the following information: target node identifiers for the target cloud based Radio Access network entities or functions; actual and/or predicted availability for supported resources types in the target cloud based Radio Access network entities or functions; and/or a last update time.

According to various examples of embodiments, policies related to the proximal computing capability table may comprise at least one of handover policies for selecting, based on the proximal computing capability table, one target cloud based Radio Access network entity or function from among the target cloud based Radio Access network entities or functions with required resource types to handover an endpoint terminal; and/or offloading policies for offloading, based on the proximal computing capability table, endpoint terminal related traffic to a selected target cloud based Radio Access network entity or function from among the target cloud based Radio Access network entities or functions with required resource types; and/or traffic steering policies for steering, based on the proximal computing capability table, a traffic among the endpoint terminal and/or the target cloud based Radio Access network entities or functions and/or the source cloud based Radio Access network entity or function; and/or spectrum sharing policies for sharing, based on the proximal computing capability table, a spectrum among the target cloud based Radio Access network entities or functions and/or the source cloud based Radio Access network entity or function; and/or AI/ML training policies for training, based on the proximal computing capability table, an AI/ML model.

According to various examples of embodiments, policies related to the proximal computing availability table may comprise at least one of handover policies for selecting, based on the proximal computing availability table, one target cloud based Radio Access network entity or function from among the target cloud based Radio Access network entities or functions with currently and/or predictively available resource types to handover an endpoint terminal; and/or offloading policies for offloading, based on the proximal computing availability table, endpoint terminal related traffic to a selected target cloud based Radio Access network entity or function from among the target cloud based Radio Access network entities or functions with currently and/or predictively available resource types; and/or traffic steering policies for steering, based on the proximal computing availability table, a traffic among the endpoint terminal and/or the target cloud based Radio Access network entities or functions and/or the source cloud based Radio Access network entity or function; and/or spectrum sharing policies for sharing, based on the proximal computing availability table, a spectrum among the target cloud based Radio Access network entities or functions and/or the source cloud based Radio Access network entity or function; and/or Al/ML training policies for training, based on the proximal computing availability table, an AI/ML model.

According to various examples of embodiments, the apparatus caused to provide the derived proximal computing capability table and/or to provide the derived proximal computing availability table may further comprise the apparatus being caused to provide the proximal computing capability table and/or the proximal computing availability table to the source cloud based Radio Access network entity or function, and/or provide the proximal computing capability table and/or the proximal computing availability table to a consumer of the proximal computing capability table and/or the proximal computing availability table different from the source cloud based Radio Access network entity or function; and/or wherein the apparatus may be caused to provide the derived proximal computing capability table and/or to provide the derived proximal computing availability table through at least one of the following interfaces: R1 services, or Service Management & Orchestrator, SMO, NBI.

Further, according to various examples of embodiments, an apparatus may comprise: at least one processor; and at least one memory storing instructions that, when executed by the at least one processor, may cause the apparatus at least to: apply a proximal computing table, which is a neighbour relation table based on capability and/or current availability of computing resources types of at least one target cloud based Radio Access network entity or function in a proximity of a source cloud based Radio Access network entity or function, determine the capability and/or current availability and/or predicted availability of computing resources types of the at least one target cloud based Radio Access network entity or function based on the applied proximal computing table; and based on the determination, manage computing resources of the source cloud based Radio Access network entity or function according to predetermined proximal computing table policies, wherein the managed computing resources are associated with an endpoint terminal, which is associated with the source cloud based Radio Access network entity or function.

According to various examples of embodiments, the proximal computing table may comprise a proximal computing capability table and/or a proximal computing availability table.

Moreover, according to various examples of embodiments, an apparatus may comprise means for retrieving information comprising at least one of configuration management, CM, data and performance management, PM, data of predetermined cloud based Radio Access network entities or functions, or resource types in the predetermined cloud based Radio Access network entities or functions, or capabilities of resource types in the predetermined cloud based Radio Access network entities or functions, or location information of the predetermined cloud based Radio Access network entities or functions; from the retrieved information and from among the predetermined cloud based Radio Access network entities or functions, means for deriving a proximal computing capability table for a source cloud based Radio Access network entity or function in a proximity of target cloud based Radio Access network entities or functions, the derivation based on a proximity analysis of the predetermined cloud based Radio Access network entities or functions in relation to the source cloud based Radio Access network entity or function and further based on a capability analysis of computing resource types in the target cloud based Radio Access network entities or functions in the proximity of the source cloud based Radio Access network entity or function; and means for providing the derived proximal computing capability table, wherein the proximal computing capability table is a neighbour relation table indicative of computing resources types and/or capability of compute resource types of the target cloud based Radio Access network entities or functions in the proximity of the source cloud based Radio Access network entity or function.

According to various examples of embodiments, the apparatus may further comprise means for retrieving further information comprising at least one of PM data of the predetermined cloud based Radio Access network entities or functions, or an availability of computing resources types in the predetermined cloud based Radio Access network entities or functions; from the retrieved further information and the proximal computing capability table, means for deriving a proximal computing availability table for the source cloud based Radio Access network entity or function in the proximity of the target cloud based Radio Access network entities or functions; and means for providing the derived proximal computing availability table, wherein the proximal computing availability table is a dynamic neighbour relation table indicative of current availability of computing resources types of the target cloud based Radio Access network entities or functions in the proximity of the source cloud based Radio Access network entity or function.

According to various examples of embodiments, the resource types indicated by the proximal computing capability table may refer to at least one of support for a neural processing unit, support for a deep processing unit, support for a graphical processing unit, support for a Content-Addressable Memory, CAM, support for a Artificial Intelligence, Al, accelerator, or, support for a Quantum Processing Unit, QPU; and/or wherein the capability of resource types indicated by the proximal computing capability table may refer to at least one of supported CPU frequencies, supported types of Al algorithms, supported Graphics Memory, supported number of Ray Tracing Cores, or supported Al & Tensor Cores.

According to various examples of embodiments, the current availability indicated by the proximal computing availability table may comprise a predicted availability of the computing type resources for predetermined time periods.

According to various examples of embodiments, the proximal computing capability table may comprise the following information: target node identifiers for the target cloud based Radio Access network entities or functions; and/or resource types supported by the target cloud based Radio Access network entities or functions; and/or capabilities of resource types; and/or a last update time.

According to various examples of embodiments, the proximal computing availability table may comprise the following information: target node identifiers for the target cloud based Radio Access network entities or functions; actual and/or predicted availability for supported resources types in the target cloud based Radio Access network entities or functions; and/or a last update time.

According to various examples of embodiments, policies related to the proximal computing capability table may comprise at least one of handover policies for selecting, based on the proximal computing capability table, one target cloud based Radio Access network entity or function from among the target cloud based Radio Access network entities or functions with required resource types to handover an endpoint terminal; and/or offloading policies for offloading, based on the proximal computing capability table, endpoint terminal related traffic to a selected target cloud based Radio Access network entity or function from among the target cloud based Radio Access network entities or functions with required resource types; and/or traffic steering policies for steering, based on the proximal computing capability table, a traffic among the endpoint terminal and/or the target cloud based Radio Access network entities or functions and/or the source cloud based Radio Access network entity or function; and/or spectrum sharing policies for sharing, based on the proximal computing capability table, a spectrum among the target cloud based Radio Access network entities or functions and/or the source cloud based Radio Access network entity or function; and/or AI/ML training policies for training, based on the proximal computing capability table, an AI/ML model.

According to various examples of embodiments, policies related to the proximal computing availability table may comprise at least one of handover policies for selecting, based on the proximal computing availability table, one target cloud based Radio Access network entity or function from among the target cloud based Radio Access network entities or functions with currently and/or predictively available resource types to handover an endpoint terminal; and/or offloading policies for offloading, based on the proximal computing availability table, endpoint terminal related traffic to a selected target cloud based Radio Access network entity or function from among the target cloud based Radio Access network entities or functions with currently and/or predictively available resource types; and/or traffic steering policies for steering, based on the proximal computing availability table, a traffic among the endpoint terminal and/or the target cloud based Radio Access network entities or functions and/or the source cloud based Radio Access network entity or function; and/or spectrum sharing policies for sharing, based on the proximal computing availability table, a spectrum among the target cloud based Radio Access network entities or functions and/or the source cloud based Radio Access network entity or function; and/or Al/ML training policies for training, based on the proximal computing availability table, an AI/ML model.

According to various examples of embodiments, the apparatus may further comprise means for providing the proximal computing capability table and/or the proximal computing availability table to the source cloud based Radio Access network entity or function, and/or means for providing the proximal computing capability table and/or the proximal computing availability table to a consumer of the proximal computing capability table and/or the proximal computing availability table different from the source cloud based Radio Access network entity or function; and/or wherein the apparatus may further comprise means for providing the derived proximal computing capability table and/or the derived proximal computing availability table through at least one of the following interfaces: R1 services, or SMO NBI.

Further, according to various examples of embodiments, an apparatus may comprise means for applying a proximal computing table, which is a neighbour relation table based on capability and/or current availability of computing resources types of at least one target cloud based Radio Access network entity or function in a proximity of a source cloud based Radio Access network entity or function, means for determining the capability and/or current availability and/or predicted availability of computing resources types of the at least one target cloud based Radio Access network entity or function based on the applied proximal computing table; and based on the determination, means for managing computing resources of the source cloud based Radio Access network entity or function according to predetermined proximal computing table policies, wherein the managed computing resources are associated with an endpoint terminal, which is associated with the source cloud based Radio Access network entity or function.

According to various examples of embodiments, the proximal computing table may comprise a proximal computing capability table and/or a proximal computing availability table.

According to various examples of embodiments, the expression "means for" in combination with a certain function, like "means for retrieving", may also be understood as "configured to" in combination with a certain function, like "configured to retrieve".

Further, according to at least some examples of embodiments, a method may comprise retrieving information comprising at least one of configuration management, CM, data and performance management, PM, data of predetermined cloud based Radio Access network entities or functions, or resource types in the predetermined cloud based Radio Access network entities or functions, or capabilities of resource types in the predetermined cloud based Radio Access network entities or functions, or location information of the predetermined cloud based Radio Access network entities or functions; from the retrieved information and from among the predetermined cloud based Radio Access network entities or functions, deriving a proximal computing capability table for a source cloud based Radio Access network entity or function in a proximity of target cloud based Radio Access network entities or functions, the derivation based on a proximity analysis of the predetermined cloud based Radio Access network entities or functions in relation to the source cloud based Radio Access network entity or function and further based on a capability analysis of computing resource types in the target cloud based Radio Access network entities or functions in the proximity of the source cloud based Radio Access network entity or function; and providing the derived proximal computing capability table, wherein the proximal computing capability table is a neighbour relation table indicative of computing resources types and/or capability of compute resource types of the target cloud based Radio Access network entities or functions in the proximity of the source cloud based Radio Access network entity or function.

According to at least some examples of embodiments, the method may further comprise retrieving further information comprising at least one of PM data of the predetermined cloud based Radio Access network entities or functions, or an availability of computing resources types in the predetermined cloud based Radio Access network entities or functions; from the retrieved further information and the proximal computing capability table, deriving a proximal computing availability table for the source cloud based Radio Access network entity or function in the proximity of the target cloud based Radio Access network entities or functions; and providing the derived proximal computing availability table, wherein the proximal computing availability table is a dynamic neighbour relation table indicative of current availability of computing resources types of the target cloud based Radio Access network entities or functions in the proximity of the source cloud based Radio Access network entity or function.

According to at least some examples of embodiments, the resource types indicated by the proximal computing capability table may refer to at least one of support for a neural processing unit, support for a deep processing unit, support for a graphical processing unit, support for a Content-Addressable Memory, CAM, support for a Artificial Intelligence, Al, accelerator, or, support for a Quantum Processing Unit, QPU; and/or wherein the capability of resource types indicated by the proximal computing capability table may refer to at least one of supported CPU frequencies, supported types of Al algorithms, supported Graphics Memory, supported number of Ray Tracing Cores, or supported Al & Tensor Cores.

According to at least some examples of embodiments, the current availability indicated by the proximal computing availability table may comprise a predicted availability of the computing type resources for predetermined time periods.

According to at least some examples of embodiments, the proximal computing capability table may comprise the following information: target node identifiers for the target cloud based Radio Access network entities or functions; and/or resource types supported by the target cloud based Radio Access network entities or functions; and/or capabilities of resource types; and/or a last update time.

According to at least some examples of embodiments, the proximal computing availability table may comprise the following information: target node identifiers for the target cloud based Radio Access network entities or functions; actual and/or predicted availability for supported resources types in the target cloud based Radio Access network entities or functions; and/or a last update time.

According to at least some examples of embodiments, policies related to the proximal computing capability table may comprise at least one of handover policies for selecting, based on the proximal computing capability table, one target cloud based Radio Access network entity or function from among the target cloud based Radio Access network entities or functions with required resource types to handover an endpoint terminal; and/or offloading policies for offloading, based on the proximal computing capability table, endpoint terminal related traffic to a selected target cloud based Radio Access network entity or function from among the target cloud based Radio Access network entities or functions with required resource types; and/or traffic steering policies for steering, based on the proximal computing capability table, a traffic among the endpoint terminal and/or the target cloud based Radio Access network entities or functions and/or the source cloud based Radio Access network entity or function; and/or spectrum sharing policies for sharing, based on the proximal computing capability table, a spectrum among the target cloud based Radio Access network entities or functions and/or the source cloud based Radio Access network entity or function; and/or AI/ML training policies for training, based on the proximal computing capability table, an AI/ML model.

According to at least some examples of embodiments, policies related to the proximal computing availability table may comprise at least one of handover policies for selecting, based on the proximal computing availability table, one target cloud based Radio Access network entity or function from among the target cloud based Radio Access network entities or functions with currently and/or predictively available resource types to handover an endpoint terminal; and/or offloading policies for offloading, based on the proximal computing availability table, endpoint terminal related traffic to a selected target cloud based Radio Access network entity or function from among the target cloud based Radio Access network entities or functions with currently and/or predictively available resource types; and/or traffic steering policies for steering, based on the proximal computing availability table, a traffic among the endpoint terminal and/or the target cloud based Radio Access network entities or functions and/or the source cloud based Radio Access network entity or function; and/or spectrum sharing policies for sharing, based on the proximal computing availability table, a spectrum among the target cloud based Radio Access network entities or functions and/or the source cloud based Radio Access network entity or function; and/or AI/ML training policies for training, based on the proximal computing availability table, an AI/ML model.

According to at least some examples of embodiments, the providing of the derived proximal computing capability table and/or the providing of the derived proximal computing availability table may comprise at least one of providing the proximal computing capability table and/or the proximal computing availability table to the source cloud based Radio Access network entity or function, and/or providing the proximal computing capability table and/or the proximal computing availability table to a consumer of the proximal computing capability table and/or the proximal computing availability table different from the source cloud based Radio Access network entity or function; and/or wherein the providing of the derived proximal computing capability table and/or the providing of the derived proximal computing availability table may be performed through at least one of the following interfaces: R1 services, or SMO NBI.

Further, according to at least some examples of embodiments, a method may comprise applying a proximal computing table, which is a neighbour relation table based on capability and/or current availability of computing resources types of at least one target cloud based Radio Access network entity or function in a proximity of a source cloud based Radio Access network entity or function, determining the capability and/or current availability and/or predicted availability of computing resources types of the at least one target cloud based Radio Access network entity or function based on the applied proximal computing table; and based on the determination, managing computing resources of the source cloud based Radio Access network entity or function according to predetermined proximal computing table policies, wherein the managed computing resources are associated with an endpoint terminal, which is associated with the source cloud based Radio Access network entity or function.

According to at least some examples of embodiments, the proximal computing table may comprise a proximal computing capability table and/or a proximal computing availability table

Furthermore, according to at least some examples of embodiments, there may be provided a computer program product for a computer, including software code portions for performing the steps of any of the above-outlined methods, when said product is run on the computer.

According to at least some examples of embodiments, in relation to the computer program product, the computer program product may include a computer-readable medium on which said software code portions are stored, and/or the computer program product may be directly loadable into the internal memory of the computer and/or transmittable via a network by means of at least one of upload, download and push procedures.

Any one of the aspects mentioned according to the claims facilitates a proximal computing capability and availability table, thereby providing at least part of the aforementioned advantages and improvements.

In more detail, the subject disclosure describes a proximal computing capability and availability table, which may, according to some examples of embodiments, prove advantageous over a proprietary solution for at least the following reasons.

Examples of embodiments described in the subject disclosure may, for instance, provide the following advantages. Namely, to compute resource type capability/availability aware offloading decisions in a Communication and Computing Integrated Network, also known as Compute network convergence. Also, to enable an improved application mobility performance especially for applications with high computing and low latency requirements such as XR based applications. Further, to enable a wider acceptance of Compute network convergence-based solutions among operators and end users.

Further advantages may become apparent to a person skilled in the art from the following detailed description.

### BRIEF DESCRIPTION OF THE DRAWINGS

Some examples of embodiments of the subject disclosure are described below, by way of example only, with reference to the accompanying drawings, in which:
FIG. 1 shows a joint RAN + Computing Node used in Computing and Network Convergence according to various examples of embodiments of the subject disclosure;
FIG. 2 (including parts 1 of 3 to 3 of 3; to be connected at A-A' and B-B' as well as A"-A‴ and B"-B‴) shows O-RAN Standard Relevance, Proximal Computing Capability Table, according to various examples of embodiments of the subject disclosure;
FIG. 3 (including parts 1 of 3 to 3 of 3; to be connected at A-A' and B-B' as well as A"-A‴ and B"-B‴) shows O-RAN Standard Relevance, Proximal Computing Availability Table, according to various examples of embodiments of the subject disclosure;
FIG. 4 shows a diagram, showing an illustration of mobility of a UE running XR application based on Proximal Computing Capability/Availability tables/policies, according to various examples of embodiments of the subject disclosure;
FIG. 5 shows a flowchart illustrating steps corresponding to an example method according to various examples of embodiments of the subject disclosure;
FIG. 6 shows a flowchart illustrating steps corresponding to an example method according to various examples of embodiments of the subject disclosure;
FIG. 7 shows a block diagram illustrating an example apparatus according to various examples of embodiments of the subject disclosure; and
FIG. 8 shows a block diagram illustrating an example apparatus according to various examples of embodiments of the subject disclosure.

### DETAILED DESCRIPTION

In general, two or more end points involved in a communication therebetween may be implemented as a particular type of end point (e.g. a communication station or entity or function, such as a terminal device, user equipment (UE), or other communication network element, a database, a server, host, etc.), or as one or more network elements or functions (e.g. virtualized network functions), such as communication network control elements or functions, for example access network elements like access points (APs), radio base stations (BSs), relay stations, eNBs, gNBs etc., and core network elements or functions, for example control nodes, support nodes, service nodes, gateways, user plane functions, access and mobility functions, etc.. These end points may belong to a single communication network system, different communication network systems, or a combination of at least one same communication network system and at least one different communication network system.

In the following, various examples of embodiments will be described using, as an example of a communication network to which examples of embodiments may be applied, a communication network architecture based on 3GPP standards for a communication network, such as a 5G/NR, without restricting the examples of embodiments to such an architecture. It, however, is obvious for a person skilled in the art that the examples of embodiments may also be applied to other kinds of communication networks like 4G and/or LTE (and even 6G and higher) where mobile communication principles are integrated, e.g. Wi-Fi, worldwide interoperability for microwave access (WiMAX), Bluetooth^{®}, personal communications services (PCS), ZigBee^{®}, wideband code division multiple access (WCDMA), systems using ultra-wideband (UWB) technology, mobile ad-hoc networks (MANETs), wired access, etc.. Furthermore, without loss of generality, the description of some examples of embodiments is related to a mobile communication network, but the subject disclosure can be extended and applied to any other type of communication network, such as a wired communication network or datacenter networking.

The following examples of embodiments are to be understood only as illustrative in nature. Although portions of the subject disclosure may refer to the expressions "an", "one", or "some" example(s) of embodiment(s) in several specific locations, this does not necessarily mean that each such reference is related to the same example(s) of embodiment(s), or that the described feature only applies to a single example of an embodiment. Individual features from different examples of embodiments may also be combined to provide other examples of embodiments. Furthermore, terms like "comprising" and "including" should be understood as not limiting the described examples of embodiments to consist of only those features that have been mentioned; such examples of embodiments can also contain features, structures, units, modules etc. that have not been specifically mentioned.

A simplified system architecture of a (tele)communication network including a mobile communication system, where some examples of embodiments, are applicable may include an architecture of one or more communication networks. The one or more communication networks may include wireless access network subsystem(s) and core network(s). Such an architecture may include one or more communication network control elements or functions, access network elements, radio access network elements, cloud based radio access elements, access service network gateways or base transceiver stations, such as a base station (BS), an access point (AP), a NodeB (NB), an eNB, a cloud RAN node, or a gNB, a distributed or a centralized unit (CU), which controls a respective coverage area or cell(s) and with which one or more communication stations such as communication elements or functions, like user devices (e.g. customer devices), mobile devices, or terminal devices, like a UE, or another device having a similar function, such as a modem chipset, a chip, a module etc., which can also be part of a station, an element, a function or an application configured to conduct a communication, such as a UE, an entity or function usable in a machine-to-machine communication architecture, or attached as a separate element to such an element, function or application capable of conducting a communication, or the like, are configured to communicate via one or more channels via one or more communication beams for transmitting several types of data in a plurality of access domains. Furthermore, (core) network elements or network functions ((core) network control elements or network functions, (core) network management elements or network functions), such as gateway network elements/functions, mobility management entities, a mobile switching center, servers, databases and the like may be included.

Functions and interconnections of the described elements and functions, which also depend on the actual network type, are apparent to those skilled in the art and may be described in corresponding specifications, so that a description thereof is omitted herein. However, it is to be noted that several additional network elements and signaling links may be employed for a communication to or from an element, function or application, like a communication endpoint, a communication network control element, such as a server, a gateway, a radio network controller, and other elements of the same or other communication networks besides those described in detail herein below.

It should be appreciated that according to some examples of embodiments, a so-called "liquid" or flexible network concept may be implemented where the operations and functionalities of a network element, a network function, or of another entity of the network, may be performed in different entities or functions, such as in a node, host or server, in a flexible manner. Thus, a "division of labor" between involved network elements, functions or entities may vary case by case.

The subject disclosure, in some examples of embodies, relates to a proximal computing capability and availability table.

Computing and Network Convergence enables the collaboration of communication network and computing. It is an approach of softening the boundaries between the cloud computing and networking, such that their resources can be utilized in the most efficient way. This allows the applications to leverage on such convergence of compute and network resources. Cloud based RAN solutions can play an important role in the Computing and Network Convergence with its potential to share some of its vacant computing resources as the edge computing platform. New age applications based on XR, V2X can benefit from Computing and Network Convergence but they require application mobility in addition to posing stringent requirements on both communication and computing. New network architecture for Computing and Network Convergence needs to address these application requirements.

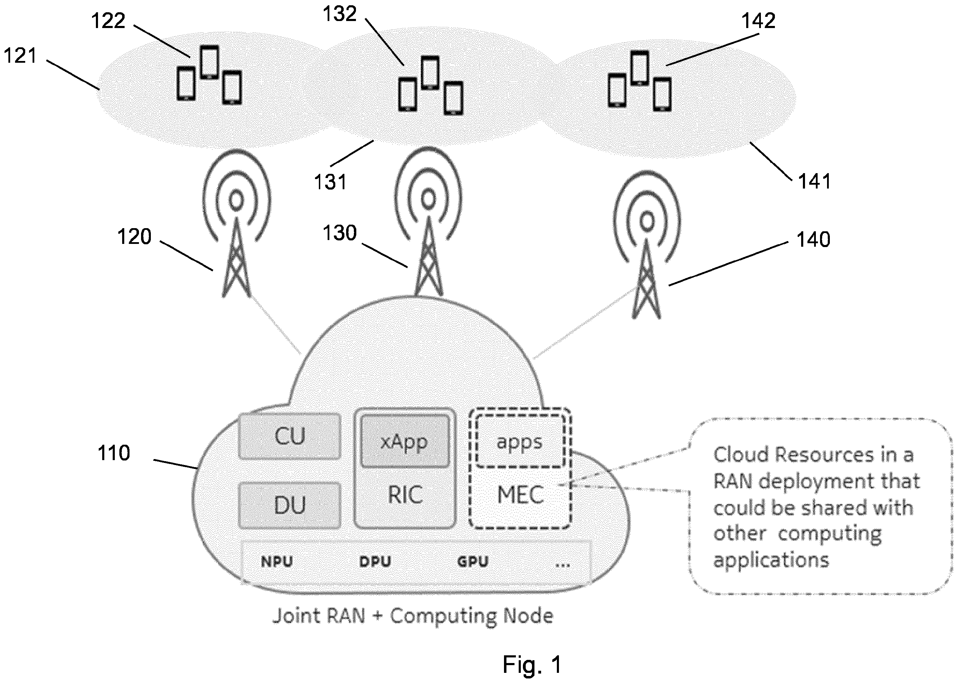

The types of computing resources required for different applications can be diverse based on the nature of the applications. However, the types of computing resources available in different nodes might be of different capabilities than what is required for specific applications. Computing resource type(s) as referred here could be, but is not limited to, the support for Neural Processing Unit, Deep Processing Unit, Graphical Processing Unit, a Content-Addressable Memory (CAM), an Artificial Intelligence (Al) accelerator, and/or a Quantum Processing Unit (QPU), etc. An illustration of the joint RAN + Computing Node 110 used in Computing and Network Convergence (CNC) is given in the FIG. 1. According to various examples of embodiments, FIG. 1 further shows UEs 122 in a coverage area 121 provided by e.g. cloud RAN Node 120, UEs 132 in a coverage area 131 provided by e.g. cloud RAN Node 130, and UEs 142 in a coverage area 141 provided by e.g. cloud RAN Node 140. Moreover, the capability of resource types indicated by the Proximal Computing Capability Table may refer to at least one of supported CPU frequencies, supported types of Al algorithms, supported Graphics Memory, supported number of Ray Tracing Cores, or supported Al & Tensor Cores.

In Compute Network Convergence approach, the idea is to use the vacant processing resources from the cloud RAN nodes (e.g., if the network load is low), to perform some edge computing related tasks so that cloud resources are used efficiently. In particular, leveraging the proximity of the cloud RAN nodes to the end users/devices is a key factor to address low latency requirements of the tasks/applications. This convergence approach could be used to offload other nodes, and/or to support various low latency applications. However, in order to take advantage of this opportunity the following needs to be considered:
1. if the vacant resources match the task requirements in terms of the type of the computing resource and it's capabilities. Computing resource type(s) as referred here could be, but is not limited to, the support for a Neural Processing Unit, a Deep Processing Unit, a Graphical Processing Unit, etc.;
2. if the amount of vacant resources of required type/capability suffices the task requirements;
3. if the nodes are within the proximity required to support the continuity of the service and service latency requirements of the applications.

The above outlined problem is more prominent when the UE needs to run applications with high computing and low latency requirements such as XR based applications. Similarly, this problem is more prominent for distributed AI/ML model training as well as inference as part of Al as a service like use cases.

This specification proposes apparatuses and methods to enable the awareness in a cloud RAN node of the information regarding the compute capabilities of other cloud RAN nodes in the proximity as well as the management of such information. Hereby, it is proposed the introduction of a proximal computing table, which stores the information on the compute capabilities of cloud RAN nodes. This information can be stored and maintained directly by the cloud RAN node and/or by other management entities, e.g., SMO/SON/RIC/O&M. The proximal computing table can be of following types:
1. Proximal Computing Capability Table: A table, which is a neighbor relation table based on the capability of the computing resource types. Computing resource type(s) as referred here could be, but is not limited to, the support for a Neural Processing Unit, a Deep Processing Unit, a Graphical Processing Unit etc.
2. Proximal Computing Availability Table: A table, which is a dynamic neighbor relation table based on the current load/availability of the computing resource types. This table also has predicted load/availability of resources at specific time window in a specific day e.g., during which time window it is expected to have the most vacant resources.

Further, throughout this specification, there are proposed methods to derive/maintain a proximal computing table. Methods to derive/maintain the above mentioned tables could be done by Service Management & Orchestrator (SMO)/ Self Organizing Networks (SON)/ RAN Intelligent Controller (RIC)/ O&M and/or cloud RAN nodes itself. Such methods need to consider computing capabilities of different resource types and their availability in different cloud RAN nodes in the proximity.

Moreover, throughout this specification, there are proposed methods to use the proximal computing table by the cloud RAN node and/or by other network entities, e.g., by means of network configuration models and policies.

For example, in the case of mobility of applications such as XR based applications, handover decision done by cloud RAN may additionally consider both the Proximal Computing Capability Table and the Proximal Computing Availability Table described above. This helps the handover of the application to a target node in the proximity with computing resource types of relevant capabilities and availability.

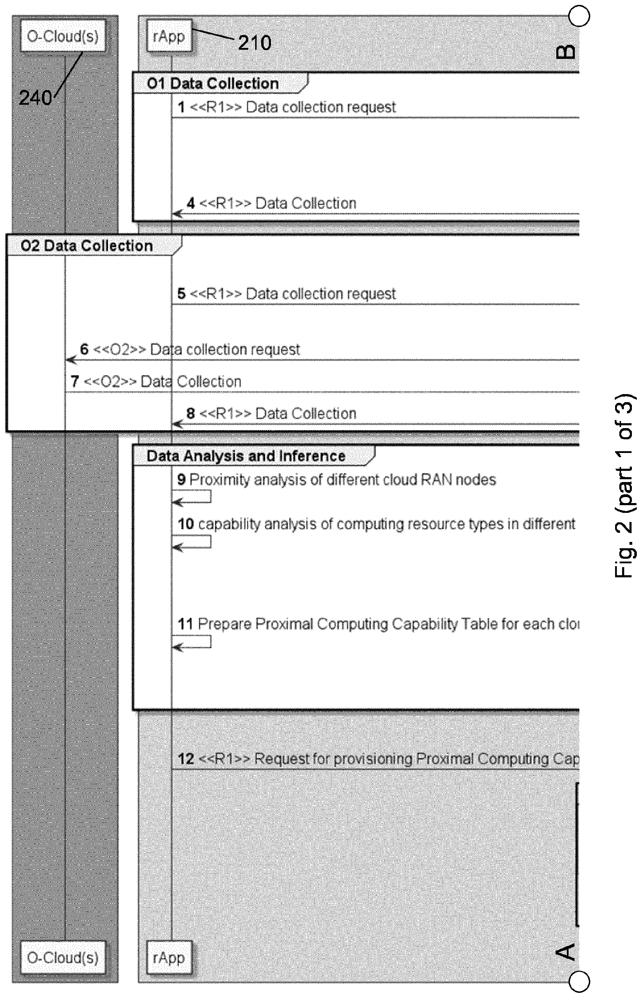

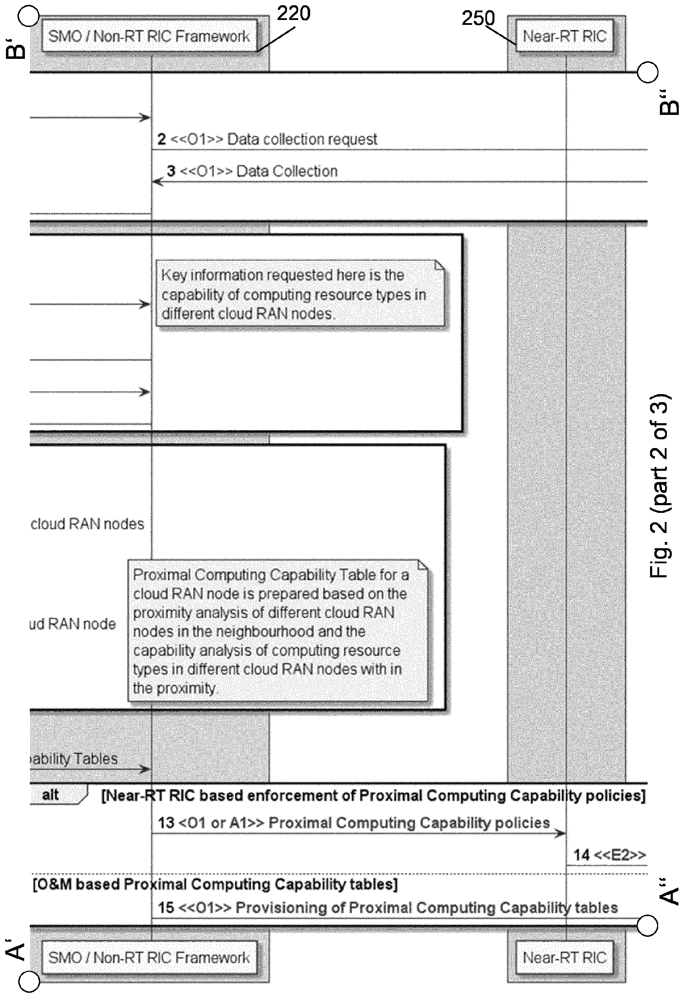

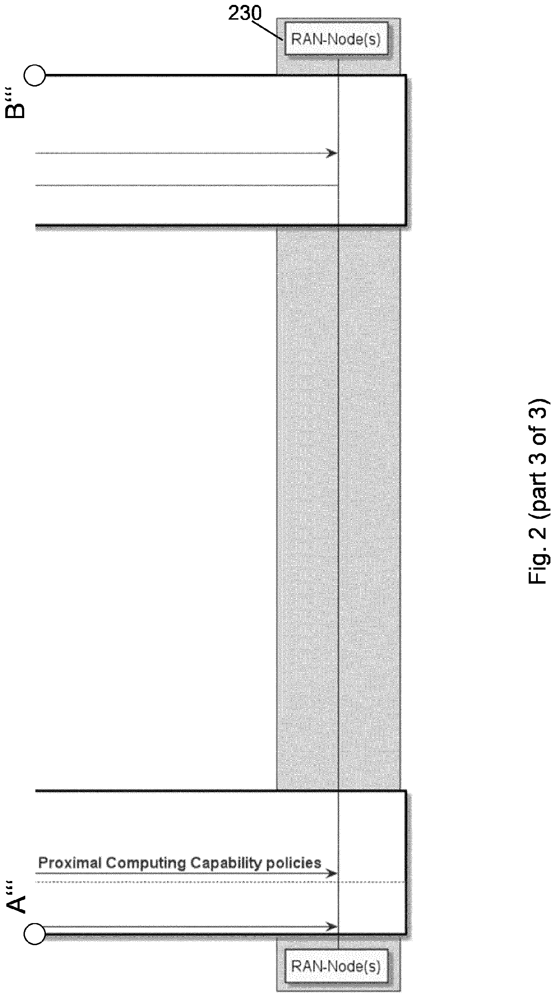

With reference to FIG. 2 (including parts 1 of 3 to 3 of 3; to be connected at A-A' and B-B' as well as A"-A‴ and B"-B‴), there is proposed a procedure for deriving/maintaining the Proximal Computing Capability Table and its use in O-RAN based cloud RAN nodes.

With reference to FIG. 2, the following steps are outlined in more detail, according to various examples of embodiments.

Steps 1 to 4 relate to O1 data collection:
- rApp (e.g. an application, which runs to obtain the Proximal Computing Capability Table) 210 retrieves different data relevant for deriving/maintaining the Proximal Computing Capability Table. This data includes, but is not limited to, configuration management (CM) and performance management (PM) data of different cloud RAN nodes, capability of resource types in different cloud RAN nodes and location information of the cloud RAN nodes.
   It shall be noted that rApp is a term defined by O-RAN and that there may be any number of rApps corresponding to different use cases according to various examples of embodiments. rApp may represent a non-RT RIC application, an application designed to consume and/or produce R1 Services. According to various examples of embodiments, rApps can leverage the functionality provided by the SMO/Non-RT RIC framework to deliver value added services related to intelligent RAN optimization and operation.
- CM/PM data is retrieved using R1 services provided by SMO/Non-RT RIC Framework 220 which in turn uses O1 interface to retrieve the related data from different cloud RAN nodes 230.

Steps 5 to 8 relate to O2 data collection:
- Capability of resource types is retrieved using R1 services provided by SMO/Non-RT RIC Framework 220, which in turn uses O2 interface to retrieve the related data from the O-Cloud 240 associated with different cloud RAN nodes 230.

Steps 9 to 11 relate to data analysis and inference:
- rApp 210 derives the Proximal Computing Capability Table for each cloud RAN node based on the proximity analysis of different cloud RAN nodes in the neighborhood and the capability analysis of computing resource types in different cloud RAN nodes within the proximity. As used throughout this specification, the term proximity may be understood to mean that a cell coverage area of the source node has at least some overlap with the cell coverage area of the target node.

Steps 12 to 15 relate to provisioning:
- rApp 210 requests R1 services provided by SMO/Non-RT RIC Framework 220 to provision/update the Proximal Computing Capability Table/policies. This could be achieved using the near-RT RIC or using the cloud RAN node directly.
- In the variant using A1 policies towards near-RT RIC, rApp 210 creates/updates corresponding policies and requests R1 services related to A1 Policy. R1 Service in turn creates/updates the policies at one or more Near-RT RIC 250 instances using the A1 interface. Near-RT RIC 250 will then use E2 control or E2 policy to enforce the same at the Cloud RAN nodes 230 as part of relevant use cases.
- In the variant using O1 CM towards Near-RT RIC 250, rApp 210 creates/updates corresponding information model related to the Proximal Computing Capability Table and requests R1 services related to CM Provisioning. R1 Service in turn creates/updates the CM objects at Near-RT RIC 250 using O1 CM interface. Near-RT RIC 250 will then use E2 control or E2 policy to enforce the same at the Cloud RAN nodes 230 as part of relevant use cases.
- In the variant using O1 CM directly towards cloud RAN node 230, rApp 210 creates/updates corresponding information model related to the Proximal Computing Capability Table and requests R1 services related to CM Provisioning. R1 Service in turn creates/updates the CM objects at cloud RAN nodes 230 using O1 CM interface. Cloud RAN nodes 230 will then use this table as part of relevant use cases.

The Proximal Computing Capability Table/Policy may contain the following information: Target node identifiers for the target cloud RAN nodes (e.g. for target cloud based Radio Access network entities or functions); and/or resource types supported by each target node: and/or capabilities of resource types (as e.g. supported by each target node); and/or a last update time.

Examples for the Proximal Computing Capability Policies could be related to handover policies, like e.g. to handover UEs to those target cloud RAN nodes, which have required resource types, and/or offloading policies, like e.g. to offload UE traffic to target cloud RAN nodes with required resource types. Here, a UE traffic can be related to XR rendering, where GPU might be required, or AI/ML processing such as performing inference or training where NPU might be required. Moreover, further policies may be traffic steering policies for steering a traffic among the UE and/or the target cloud RAN nodes and/or the source cloud RAN node; spectrum sharing policies for sharing, a spectrum (e.g. frequency spectrum, time spectrum, time-frequency spectrum) among the target cloud RAN nodes and/or the source cloud RAN node. In addition, policies may be AI/ML training policies for training an AI/ML model.

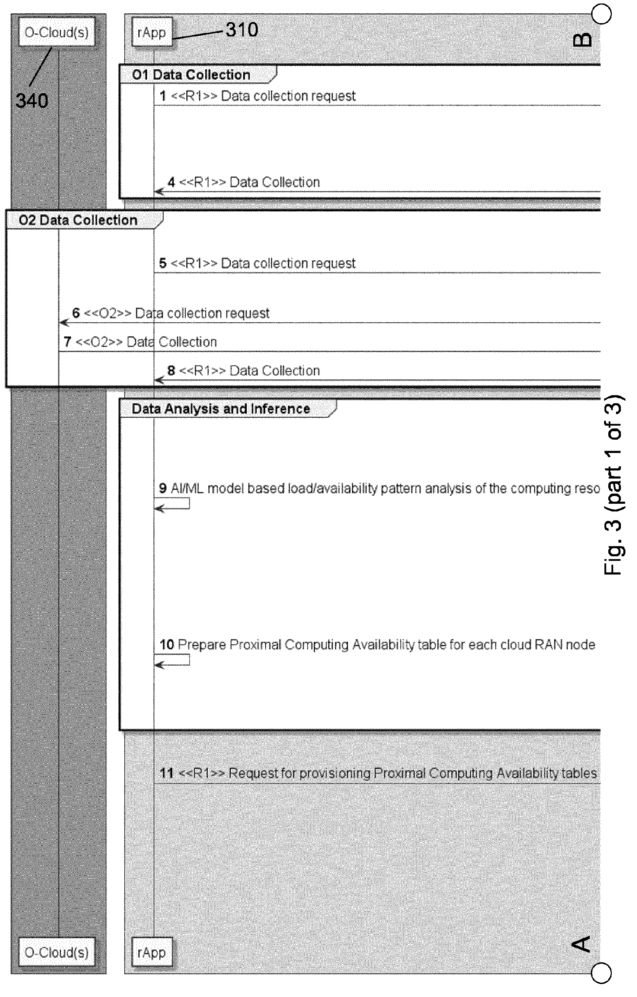

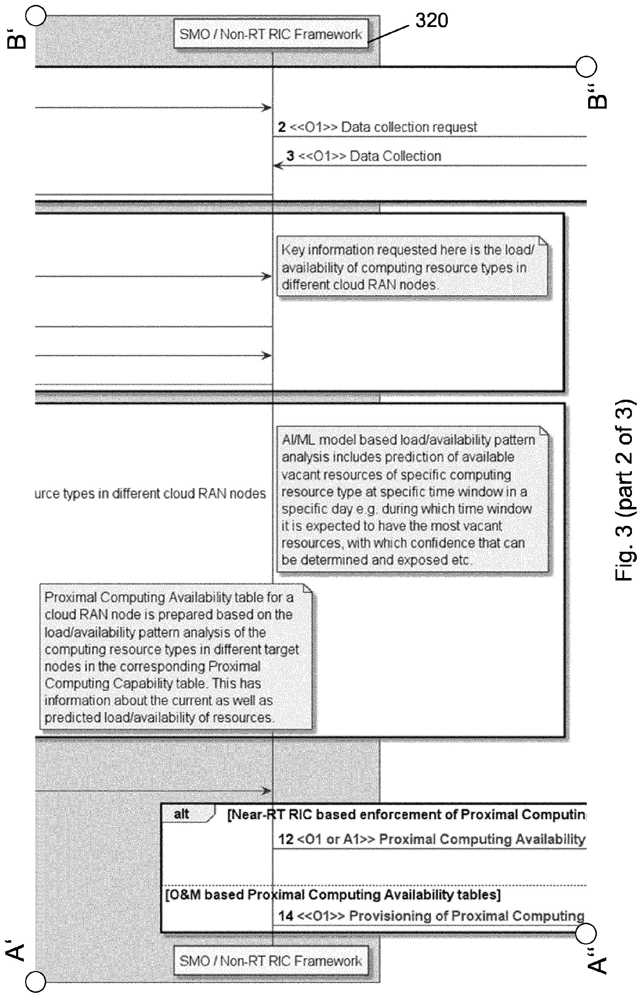

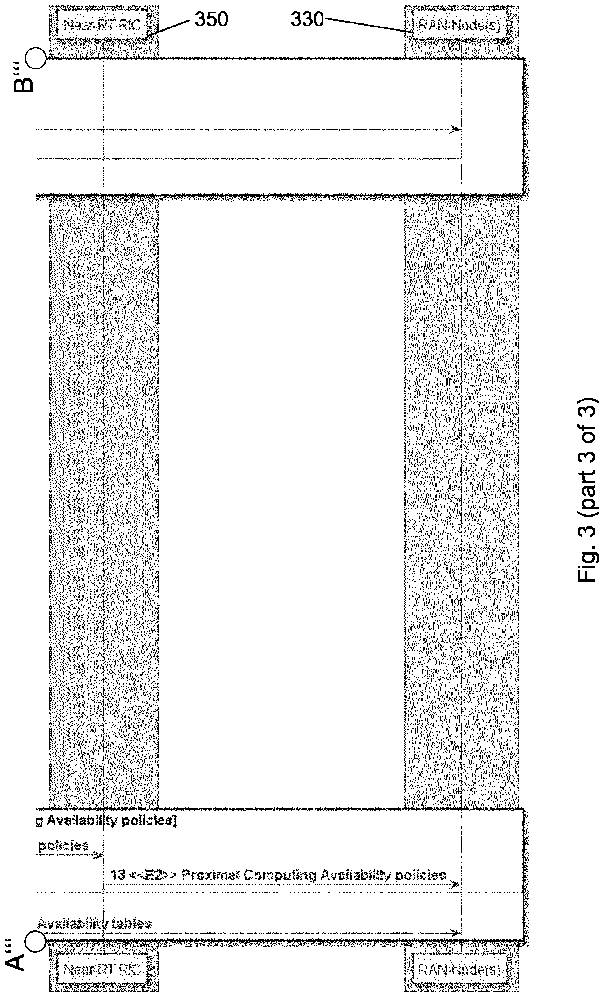

Referring now to FIG. 3 (including parts 1 of 3 to 3 of 3; to be connected at A-A' and B-B' as well as A"-A‴ and B"-B‴), there is shown a proposed procedure for deriving/maintaining the Proximal Computing Availability Table and its use in O-RAN based cloud RAN nodes

With reference to FIG. 3, the following steps are outlined in more detail, according to various examples of embodiments.

Steps 1 to 4 relate to O1 data collection:
- rApp 310 retrieves different data relevant for deriving/maintaining the Proximal Computing Availability Table. This data includes, but is not limited to, performance management (PM) data of different cloud RAN nodes and load/availability of computing resource types in different cloud RAN nodes.
- PM data is retrieved using R1 services provided by SMO/Non-RT RIC Framework 320 which in turn uses O1 interface to retrieve the related data from different cloud RAN nodes 330.

Steps 5 to 8 relate to O2 data collection:
- Load/Availability of computing resource types is retrieved using R1 services provided by SMO/Non-RT RIC Framework 320, which in turn uses O2 interface to retrieve the related data from the O-Cloud 340 associated with different cloud RAN nodes 330.

Steps 9 to 10 relate to data analysis and inference:
- rApp 310 derives the Proximal Computing Availability Table for a cloud RAN node based on the load/availability analysis of the computing resource types in different target nodes in the corresponding Proximal Computing Capability Table (as outlined above with reference to FIG. 2). rApp 310 may rely on AI/ML model-based load/availability pattern analysis of the computing resource types, this includes prediction of available vacant resources at specific time window in a specific day e.g., during which time window it is expected to have the most vacant resources, with which confidence that can be determined and exposed etc.

Steps 11 - 14 relate to provisioning:
- rApp 310 requests R1 services provided by SMO/Non-RT RIC Framework 320 to provision/update the Proximal Computing Availability Table/Policies. This could be achieved using the Near-RT RIC 350 or using the cloud RAN node 330 directly.
- In the variant using A1 policies towards Near-RT RIC 350, rApp 310 creates/updates corresponding policies and requests R1 services related to A1 Policy. R1 Service in turn creates/updates the policies at one or more Near-RT RIC 350 instances using the A1 interface. Near-RT RIC 350 will then use E2 control or E2 policy to enforce the same at the Cloud RAN nodes 330 as part of relevant use cases.
- In the variant using O1 CM towards Near-RT RIC 350, rApp 310 creates/updates corresponding information model related to Proximal Computing Availability Table and requests R1 services related to CM Provisioning. R1 Service in turn creates/updates the CM objects at Near-RT RIC 350 using O1 CM interface. Near-RT RIC 350 will then use E2 control or E2 policy to enforce the same at the Cloud RAN nodes 330 as part of relevant use cases.
- In the variant using O1 CM directly towards cloud RAN node 330, rApp 310 creates/updates corresponding information model related to Proximal Computing Availability Table and requests R1 services related to CM Provisioning. R1 Service in turn creates/updates the CM objects at cloud RAN nodes 330 using O1 CM interface. Cloud RAN nodes 330 will then use this table as part of relevant use cases

Proximal Computing Availability Table/Policy may contain the following information, according to various examples of embodiments. A target node ID, an actual/predicted availability for each of the supported resource types in the target node, and/or a last update time, which indicates the time at which the availability information for a target node is updated. The actual/predicted availability for each of the supported resource types in the target node may comprise: a specific time window for which availability is given, a resource type, percentage of availability, a flag indicating whether it is a predicted value or not, criteria(s) specific for the resource type for that target node for all use cases or for specific use case, like e.g. resource availability thresholds for handover, and/or resource with highest availability for AI/ML services.

Examples for Proximal Computing Availability Policies could be related to handover policies, like e.g. to handover UEs to those target cloud RAN nodes, which have required resource type capability and/or availability, predicted or current, and/or offloading policies, like e.g. to offload UE traffic to target cloud RAN nodes with required resource type capability and/or availability. Here, a UE traffic can be related to XR rendering, where GPU might be required, or AI/ML processing such as performing inference or training where NPU might be required. Moreover, further policies may be traffic steering policies for steering a traffic among the UE and/or the target cloud RAN nodes and/or the source cloud RAN node; spectrum sharing policies for sharing, a spectrum (e.g. frequency spectrum, time spectrum, time-frequency spectrum) among the target cloud RAN nodes and/or the source cloud RAN node. In addition, policies may be AI/ML training policies for training an AI/ML model.

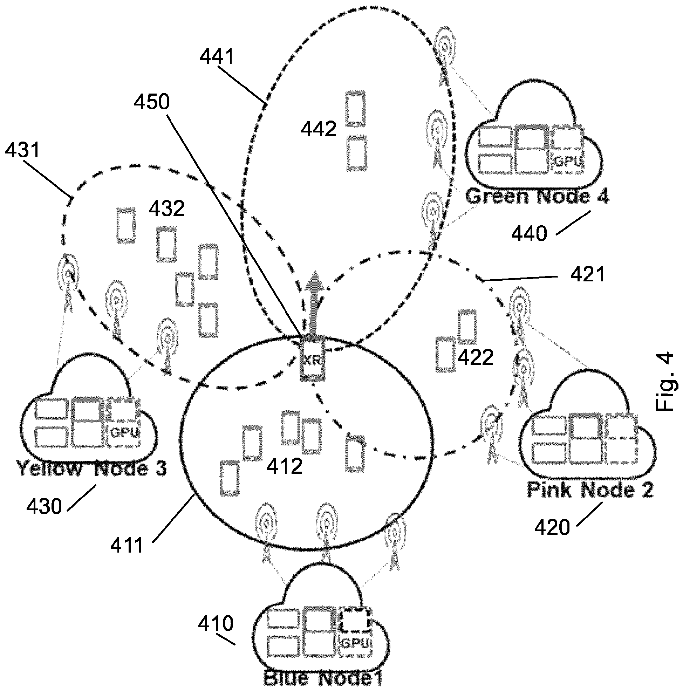

Referring now to FIG. 4, there is shown an example illustration of the usage of the Proximal Computing Capability Tables/Policies and/or the Proximal Computing Availability Tables/Policies, according to various examples of embodiments.

Coverage for different UE(s) 450, 412, 422, 432 and 442 in FIG. 4 are given by four nodes, i.e. Blue Node 1 410, Pink Node 2 420, Yellow Node 3 430, and Green Node 4 440; Blue Node 1 410 is providing the coverage for a first area 411, Pink Node 2 420 is providing the coverage for a second area 421, Yellow Node 3 430 is providing the coverage for a third area 431 and Green Node 4 440 is providing the coverage for a fourth area 441. All the nodes except Pink Node 2 420 has the GPU capability. It shall be understood that Pink Node 2 420, Yellow Node 3 430 and Green Node 4 440 are in the proximity of Blue Node 1 410.

A UE 450 (highlighted in the middle of FIG. 4) in FIG. 4 is currently served by Blue Node 1 410 and is in the first coverage area 411. This UE 450 has a XR application running in it and the latency requirements of this XR application can be better served by nodes with GPU capability. When the UE 450 moves away from the first coverage area 411 as shown in the FIG. 4 by the indicated arrow, the UE 450 could be served by any of the other nodes 420, 430 or 440, however, only Yellow Node 3 430 and Green Node 4 440 can fulfill the GPU requirement with acceptable latency. Proximal Computing Capability Table/Policies in Blue Node 1 410 enable the Blue Node 1 410 (or another entity or function running the Proximal Computing Capability Table/Policies under considering the Blue Node 1 410 to represent the source node) to make the handover decision considering the computing capability of resource types in the target nodes. This means that Blue Node 1 410 can choose Yellow Node 3 430 or Green Node 4 440 for handing over the UE 450, but cannot chose Pink Node 2 420.

In addition to the capability, load/availability of the corresponding resource type in the target node is an import factor for handover decision. In FIG. 4, Yellow Node 3 430 has a higher load for GPU and hence a lower availability of required GPU resources needed for the UE 450 in comparison with the Green Node 4 440. The Proximal Computing Availability Table/Policies in Blue Node 1 410 enable it to make the handover decision considering the load/availability of resource types in the target nodes. This means that Blue Node 1 410 will choose Green Node 4 440 for handing over the UE 450 so that XR application can continue to perform with needed latency levels after the handover.

With reference to FIGS. 1 to 4, for instance, according to various examples of embodiments, as least some of the following advantages may be achieved. Namely, to compute resource type capability/availability aware offloading decisions in a Communication and Computing Integrated Network, also known as Compute network convergence. Also, to enable an improved application mobility performance especially for applications with high computing and low latency requirements such as XR based applications. Further, to enable a wider acceptance of Compute network convergence-based solutions among operators and end users.

In the following, further examples of embodiments are described in relation to the aforementioned methods and/or apparatuses.

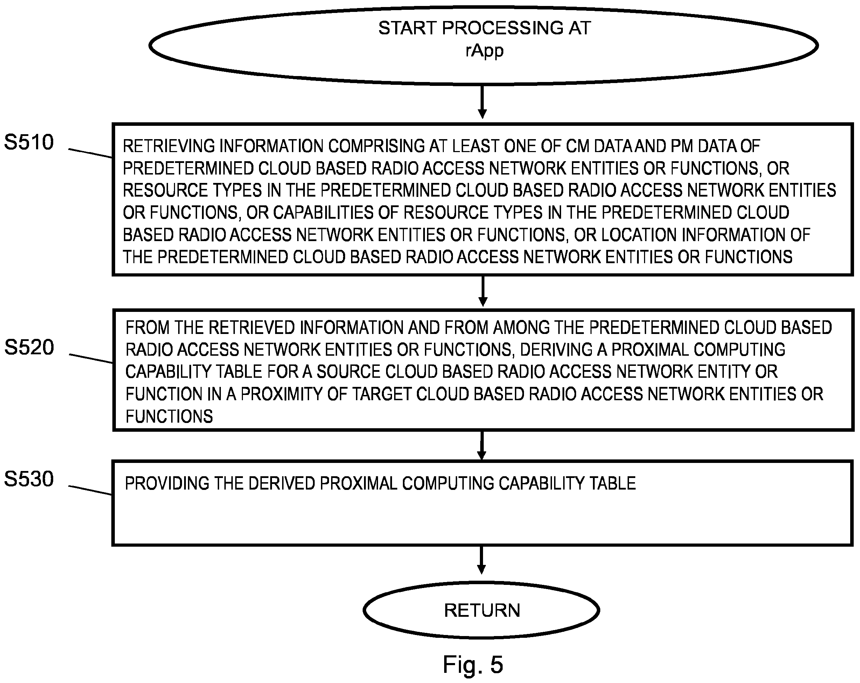

Referring now to FIG. 5, there is shown a flowchart illustrating steps corresponding to an example method according to various examples of embodiments of the subject disclosure.

In particular, according to FIG. 5, in S510, the method comprises retrieving information comprising at least one of configuration management, CM, data and performance management, PM, data of predetermined cloud based Radio Access network entities or functions (e.g. predetermined cloud RAN Nodes, like e.g. such Pink Node 2 420, Yellow Node 3 430 and Green Node 4 440), or resource types in the predetermined cloud based Radio Access network entities or functions, or capabilities of resource types in the predetermined cloud based Radio Access network entities or functions, or location information of the predetermined cloud based Radio Access network entities or functions.

It shall be noted that predetermined cloud based Radio Access network entities or functions as used herein may comprise at least one of:
- a list of cloud based Radio Access network entities or functions (e.g. cloud RAN Nodes) given by a user of the rApp for which the proximal computing capability table needs to be generated. The user could provide this list either using GUI based capabilities or other means here;
- a list of cloud based Radio Access network entities or functions given by the user of R1 Service for which the proximal computing capability table needs to be generated;
- a list of cloud based Radio Access network entities or functions given by the user of SMO NBI for which the proximal computing capability table needs to be generated; or
- a list of all cloud based Radio Access network entities or functions managed by the SMO or equivalent management functions for which the proximal computing capability table needs to be generated.

Further, in S520, the method comprises, from the retrieved information and from among the predetermined cloud based Radio Access network entities or functions, deriving a proximal computing capability table for a source cloud based Radio Access network entity or function (e.g. a source cloud RAN Node, like e.g. such Blue Node 1 410) in a proximity of target cloud based Radio Access network entities or functions. The derivation is based on a proximity analysis of the predetermined cloud based Radio Access network entities or functions in relation to the source cloud based Radio Access network entity or function and further based on a capability analysis of computing resource types in the target cloud based Radio Access network entities or functions in the proximity of the source cloud based Radio Access network entity or function.

Additionally, in S530, the method comprises providing the derived proximal computing capability table. The proximal computing capability table is a neighbour relation table indicative of computing resources types and/or capability of compute resource types of the target cloud based Radio Access network entities or functions in the proximity of the source cloud based Radio Access network entity or function.

Moreover, according to at least some examples of embodiments, the method may further comprise retrieving further information comprising at least one of PM data of the predetermined cloud based Radio Access network entities or functions, or an availability of computing resources types in the predetermined cloud based Radio Access network entities or functions; from the retrieved further information and the proximal computing capability table, deriving a proximal computing availability table for the source cloud based Radio Access network entity or function in the proximity of the target cloud based Radio Access network entities or functions; and providing the derived proximal computing availability table, wherein the proximal computing availability table is a dynamic neighbour relation table indicative of current availability of computing resources types of the target cloud based Radio Access network entities or functions in the proximity of the source cloud based Radio Access network entity or function.

According to at least some examples of embodiments, the resource types indicated by the proximal computing capability table may refer to at least one of support for a neural processing unit, support for a deep processing unit, support for a graphical processing unit, support for a CAM, support for an Al accelerator, or support for a QPU; and/or the capability of resource types indicated by the proximal computing capability table may refer to at least one of supported CPU frequencies, supported types of Al algorithms, supported Graphics Memory, supported number of Ray Tracing Cores, or supported Al & Tensor Cores.

According to at least some examples of embodiments, the current availability indicated by the proximal computing availability table may comprise a predicted availability of the computing type resources for predetermined time periods.

According to at least some examples of embodiments, the proximal computing capability table may comprise the following information: target node identifiers for the target cloud based Radio Access network entities or functions; and/or resource types supported by the target cloud based Radio Access network entities or functions; and/or capabilities of resource types; and/or a last update time.

According to at least some examples of embodiments, the proximal computing availability table may comprise the following information: target node identifiers for the target cloud based Radio Access network entities or functions; actual and/or predicted availability for supported resources types in the target cloud based Radio Access network entities or functions; and/or a last update time.

According to at least some examples of embodiments, policies related to the proximal computing capability table may comprise at least one of handover policies for selecting, based on the proximal computing capability table, one target cloud based Radio Access network entity or function from among the target cloud based Radio Access network entities or functions with required resource types to handover an endpoint terminal; and/or offloading policies for offloading, based on the proximal computing capability table, endpoint terminal related traffic to a selected target cloud based Radio Access network entity or function from among the target cloud based Radio Access network entities or functions with required resource types; and/or traffic steering policies for steering, based on the proximal computing capability table, a traffic among the endpoint terminal and/or the target cloud based Radio Access network entities or functions and/or the source cloud based Radio Access network entity or function; and/or spectrum sharing policies for sharing, based on the proximal computing capability table, a spectrum among the target cloud based Radio Access network entities or functions and/or the source cloud based Radio Access network entity or function; and/or AI/ML training policies for training, based on the proximal computing capability table, an AI/ML model.

According to at least some examples of embodiments, policies related to the proximal computing availability table may comprise at least one of handover policies for selecting, based on the proximal computing availability table, one target cloud based Radio Access network entity or function from among the target cloud based Radio Access network entities or functions with currently and/or predictively available resource types to handover an endpoint terminal; and/or offloading policies for offloading, based on the proximal computing availability table, endpoint terminal related traffic to a selected target cloud based Radio Access network entity or function from among the target cloud based Radio Access network entities or functions with currently and/or predictively available resource types; and/or traffic steering policies for steering, based on the proximal computing availability table, a traffic among the endpoint terminal and/or the target cloud based Radio Access network entities or functions and/or the source cloud based Radio Access network entity or function; and/or spectrum sharing policies for sharing, based on the proximal computing availability table, a spectrum among the target cloud based Radio Access network entities or functions and/or the source cloud based Radio Access network entity or function; and/or AI/ML training policies for training, based on the proximal computing availability table, an AI/ML model.

According to at least some examples of embodiments, the providing of the derived proximal computing capability table and/or the providing of the derived proximal computing availability table may comprise at least one of providing the proximal computing capability table and/or the proximal computing availability table to the source cloud based Radio Access network entity or function, and/or providing the proximal computing capability table and/or the proximal computing availability table to a consumer of the proximal computing capability table and/or the proximal computing availability table different from the source cloud based Radio Access network entity or function; and/or wherein the providing of the derived proximal computing capability table and/or the providing of the derived proximal computing availability table may be performed through at least one of the following interfaces: R1 services, or SMO NBI.

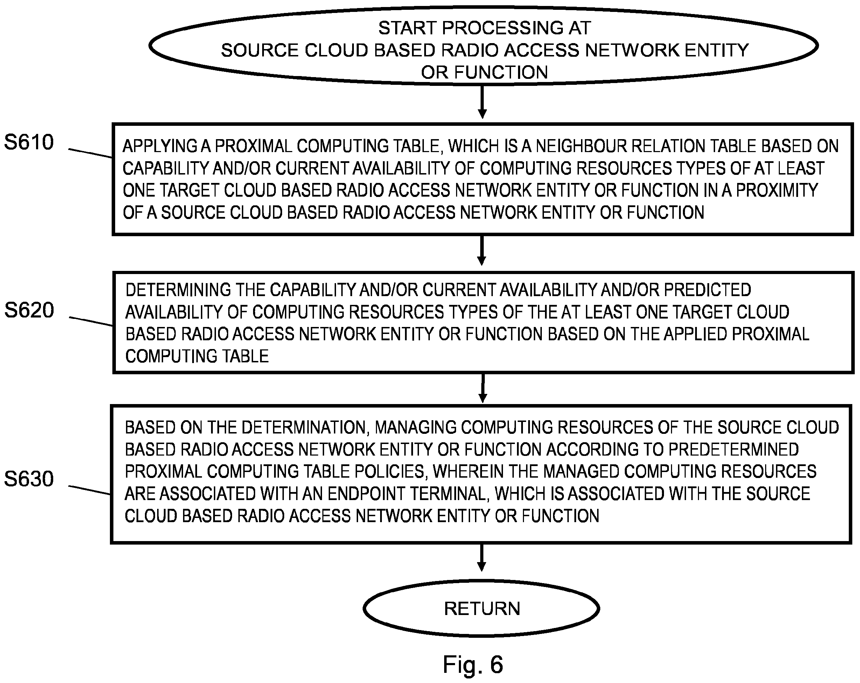

Referring now to FIG. 6, there is shown a flowchart illustrating steps corresponding to an example method according to various examples of embodiments of the subject disclosure.

In particular, according to FIG. 6, in S610, the method comprises applying a proximal computing table (e.g. the Proximal Computing Capability/Availability Table as outlined above in detail with reference to FIGS. 2 and 3), which is a neighbour relation table (e.g. dynamic neighbour relation table) based on capability and/or current availability of computing resources types of at least one target cloud based Radio Access network entity or function in a proximity of a source cloud based Radio Access network entity or function.

In addition, in S620, the method comprises determining the capability and/or current availability and/or predicted availability of computing resources types of the at least one target cloud based Radio Access network entity or function based on the applied proximal computing table.

Moreover, in S630, the method comprises, based on the determination, managing computing resources of the source cloud based Radio Access network entity or function according to predetermined proximal computing table policies, wherein the managed computing resources are associated with an endpoint terminal (e.g. an UE, like e.g. such UE 450), which is associated with the source cloud based Radio Access network entity or function.

It shall be noted that the method according to FIG. 6 may be applied at a cloud based Radio Access network entity or function, like e.g. a cloud RAN node (e.g. Blue Node 1 410), but is not limited thereto. Rather, the method may also be applied by other network entities or functions, like in near RT RIC or in another rApp or in other consumers of this information/ proximal computing table such as SMO NBI/R1 Service consumers.

According to at least some examples of embodiments, the proximal computing table may comprise a proximal computing capability table and/or a proximal computing availability table

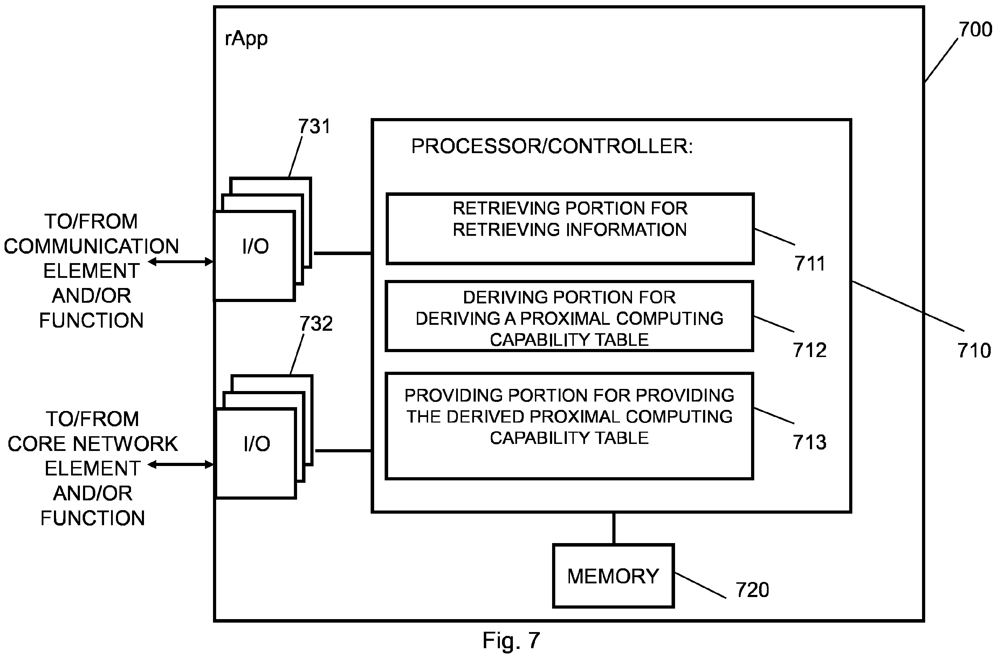

Referring now to FIG. 7, FIG. 7 shows a block diagram illustrating an example apparatus according to various examples of embodiments of the subject disclosure.

Specifically, FIG. 7 shows a block diagram illustrating an apparatus 700, which may represent a rApp (e.g. rApp 210, 310) as outlined above with reference to FIGS. 1 to 4, according to various examples of embodiments, which may participate a proximal computing capability and availability table. Furthermore, even though reference is made to a rApp, the apparatus and/or the rApp may be also a cloud based Radio Access network entity or function (e.g. a cloud RAN node) or another device or function having a similar task, such as a chipset, a chip, a module, an application etc., which can also be part of a network element or attached as a separate element to a network element, and/or a network management function and/or a service management and orchestrator, or the like. It should be understood that each block and any combination thereof may be implemented by various means or their combinations, such as hardware, software, firmware, one or more processors and/or circuitry.

The apparatus 700 shown in FIG. 7 may include a processing circuitry, a processing function, a control unit or a processor 710, such as a CPU or the like, which is suitable to enable a proximal computing capability and availability table. The processor 710 may include one or more processing portions or functions dedicated to specific processing as described below, or the processing may be run in a single processor or processing function. Portions for executing such specific processing may be also provided as discrete elements or within one or more further processors, processing functions or processing portions, such as in one physical processor like a CPU or in one or more physical or virtual entities, for example. Reference signs 731 and 732 denote input/output (I/O) units or functions (interfaces) connected to the processor or processing function 710. The I/O units 731 and 732 may be a combined unit including communication equipment towards several entities/elements, or may include a distributed structure with a plurality of different interfaces for different entities/elements. Reference sign 720 denotes a memory usable, for example, for storing data and programs/instructions to be executed by the processor or processing function 710 and/or as a working storage of the processor or processing function 710. It is to be noted that the memory 720 may be implemented by using one or more memory portions of the same or different type of memory, but may also represent an external memory, e.g. an external database provided on a cloud server.

The processor or processing function 710 is configured to execute processing related to the above described processing. In particular, the processor or processing circuitry or function 710 includes one or more of the following sub-portions. Sub-portion 711 is a retrieving portion, which is usable as a portion for retrieving information. The portion 711 may be configured to perform processing according to S510 of FIG. 5. Further, sub-portion 712 is a deriving portion, which is usable as a portion for deriving, from the retrieved information and from among the predetermined cloud based Radio Access network entities or functions, a proximal computing capability table for a source cloud based Radio Access network entity or function in a proximity of target cloud based Radio Access network entities or functions. The portion 712 may be configured to perform processing according to S520 of FIG. 5. Moreover, sub-portion 713 is a providing portion, which is usable as a portion for providing the derived proximal computing capability table. The portion 713 may be configured to perform processing according to S530 of FIG. 5.

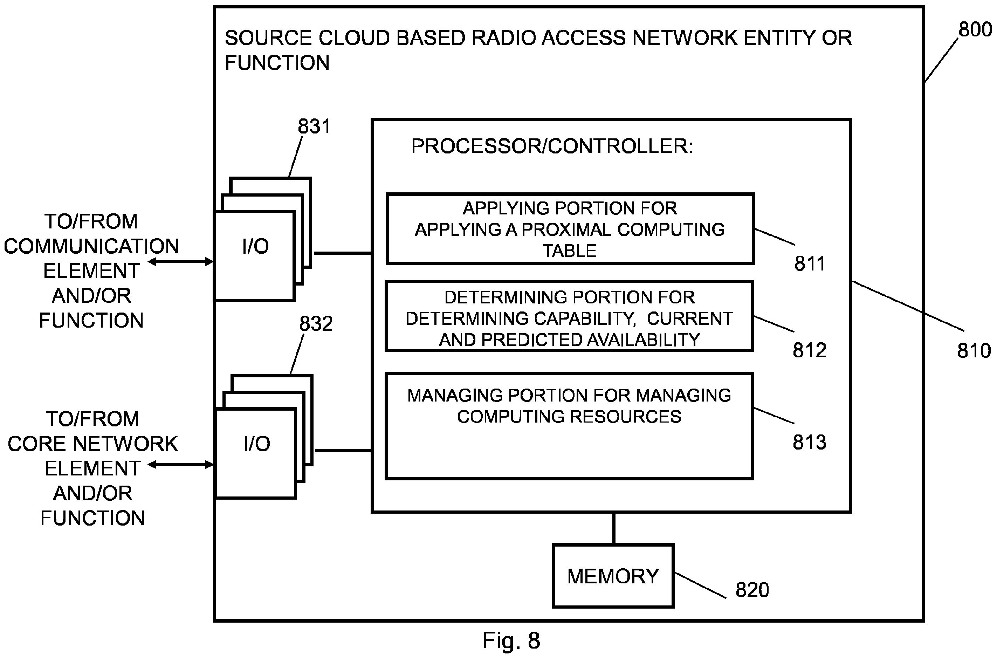

Referring now to FIG. 8, FIG. 8 shows a block diagram illustrating an example apparatus according to various examples of embodiments of the subject disclosure.

Specifically, FIG. 8 shows a block diagram illustrating an apparatus 800, which may represent a source cloud based Radio Access network entity or function (e.g. cloud RAN Node, like e.g. Blue Node 1 410) as outlined above with reference to FIGS. 1 to 4, according to various examples of embodiments, which may participate a proximal computing capability and availability table. Furthermore, even though reference is made to a cloud based Radio Access network entity or function, the apparatus and/or the cloud based Radio Access network entity or function may be also a rApp (e.g. rApp 210, 310) or another device or function having a similar task, such as a chipset, a chip, a module, an application etc., which can also be part of a network element or attached as a separate element to a network element, or the like. It should be understood that each block and any combination thereof may be implemented by various means or their combinations, such as hardware, software, firmware, one or more processors and/or circuitry.

The apparatus 800 shown in FIG. 8 may include a processing circuitry, a processing function, a control unit or a processor 810, such as a CPU or the like, which is suitable to enable a proximal computing capability and availability table. The processor 810 may include one or more processing portions or functions dedicated to specific processing as described below, or the processing may be run in a single processor or processing function. Portions for executing such specific processing may be also provided as discrete elements or within one or more further processors, processing functions or processing portions, such as in one physical processor like a CPU or in one or more physical or virtual entities, for example. Reference signs 831 and 832 denote input/output (I/O) units or functions (interfaces) connected to the processor or processing function 810. The I/O units 831 and 832 may be a combined unit including communication equipment towards several entities/elements, or may include a distributed structure with a plurality of different interfaces for different entities/elements. Reference sign 820 denotes a memory usable, for example, for storing data and programs/instructions to be executed by the processor or processing function 810 and/or as a working storage of the processor or processing function 810. It is to be noted that the memory 820 may be implemented by using one or more memory portions of the same or different type of memory, but may also represent an external memory, e.g. an external database provided on a cloud server.

The processor or processing function 810 is configured to execute processing related to the above described processing. In particular, the processor or processing circuitry or function 810 includes one or more of the following sub-portions. Sub-portion 811 is an applying portion, which is usable as a portion for applying a proximal computing table. The portion 811 may be configured to perform processing according to S610 of FIG. 6. Further, sub-portion 812 is a determining portion, which is usable as a portion for determining the capability and/or current availability and/or predicted availability of computing resources types of the at least one target cloud based Radio Access network entity or function. The portion 812 may be configured to perform processing according to S620 of FIG. 6. Moreover, sub-portion 813 is a managing portion, which is usable as a portion for managing computing resources. The portion 813 may be configured to perform processing according to S630 of FIG. 6.

It shall be noted that the apparatuses 700 and 800 as outlined above with reference to FIGS. 7 and 8 may comprise further/additional sub-portions, which may allow the apparatuses 700 and 800 to perform such methods/method steps as outlined above with reference to FIGS. 1 to 4, as well as FIGS. 5 to 6.

Moreover, according to various examples of embodiments, an apparatus may comprise means for retrieving information comprising at least one of configuration management, CM, data and performance management, PM, data of predetermined cloud based Radio Access network entities or functions, or resource types in the predetermined cloud based Radio Access network entities or functions, or capabilities of resource types in the predetermined cloud based Radio Access network entities or functions, or location information of the predetermined cloud based Radio Access network entities or functions; from the retrieved information and from among the predetermined cloud based Radio Access network entities or functions, means for deriving a proximal computing capability table for a source cloud based Radio Access network entity or function in a proximity of target cloud based Radio Access network entities or functions, the derivation based on a proximity analysis of the predetermined cloud based Radio Access network entities or functions in relation to the source cloud based Radio Access network entity or function and further based on a capability analysis of computing resource types in the target cloud based Radio Access network entities or functions in the proximity of the source cloud based Radio Access network entity or function; and means for providing the derived proximal computing capability table, wherein the proximal computing capability table is a neighbour relation table indicative of computing resources types and/or capability of compute resource types of the target cloud based Radio Access network entities or functions in the proximity of the source cloud based Radio Access network entity or function.

According to various examples of embodiments, the apparatus may further comprise means for retrieving further information comprising at least one of PM data of the predetermined cloud based Radio Access network entities or functions, or an availability of computing resources types in the predetermined cloud based Radio Access network entities or functions; from the retrieved further information and the proximal computing capability table, means for deriving a proximal computing availability table for the source cloud based Radio Access network entity or function in the proximity of the target cloud based Radio Access network entities or functions; and means for providing the derived proximal computing availability table, wherein the proximal computing availability table is a dynamic neighbour relation table indicative of current availability of computing resources types of the target cloud based Radio Access network entities or functions in the proximity of the source cloud based Radio Access network entity or function.

According to various examples of embodiments, the resource types indicated by the proximal computing capability table may refer to at least one of support for a neural processing unit, support for a deep processing unit, support for a graphical processing unit, support for a Content-Addressable Memory, CAM, support for a Artificial Intelligence, Al, accelerator, or, support for a Quantum Processing Unit, QPU; and/or wherein the capability of resource types indicated by the proximal computing capability table may refer to at least one of supported CPU frequencies, supported types of Al algorithms, supported Graphics Memory, supported number of Ray Tracing Cores, or supported Al & Tensor Cores.

According to various examples of embodiments, the current availability indicated by the proximal computing availability table may comprise a predicted availability of the computing type resources for predetermined time periods.

According to various examples of embodiments, the proximal computing capability table may comprise the following information: target node identifiers for the target cloud based Radio Access network entities or functions; and/or resource types supported by the target cloud based Radio Access network entities or functions; and/or capabilities of resource types; and/or a last update time.

According to various examples of embodiments, the proximal computing availability table may comprise the following information: target node identifiers for the target cloud based Radio Access network entities or functions; actual and/or predicted availability for supported resources types in the target cloud based Radio Access network entities or functions; and/or a last update time.

According to various examples of embodiments, policies related to the proximal computing capability table may comprise at least one of handover policies for selecting, based on the proximal computing capability table, one target cloud based Radio Access network entity or function from among the target cloud based Radio Access network entities or functions with required resource types to handover an endpoint terminal; and/or offloading policies for offloading, based on the proximal computing capability table, endpoint terminal related traffic to a selected target cloud based Radio Access network entity or function from among the target cloud based Radio Access network entities or functions with required resource types; and/or traffic steering policies for steering, based on the proximal computing capability table, a traffic among the endpoint terminal and/or the target cloud based Radio Access network entities or functions and/or the source cloud based Radio Access network entity or function; and/or spectrum sharing policies for sharing, based on the proximal computing capability table, a spectrum among the target cloud based Radio Access network entities or functions and/or the source cloud based Radio Access network entity or function; and/or AI/ML training policies for training, based on the proximal computing capability table, an AI/ML model.

According to various examples of embodiments, policies related to the proximal computing availability table may comprise at least one of handover policies for selecting, based on the proximal computing availability table, one target cloud based Radio Access network entity or function from among the target cloud based Radio Access network entities or functions with currently and/or predictively available resource types to handover an endpoint terminal; and/or offloading policies for offloading, based on the proximal computing availability table, endpoint terminal related traffic to a selected target cloud based Radio Access network entity or function from among the target cloud based Radio Access network entities or functions with currently and/or predictively available resource types; and/or traffic steering policies for steering, based on the proximal computing availability table, a traffic among the endpoint terminal and/or the target cloud based Radio Access network entities or functions and/or the source cloud based Radio Access network entity or function; and/or spectrum sharing policies for sharing, based on the proximal computing availability table, a spectrum among the target cloud based Radio Access network entities or functions and/or the source cloud based Radio Access network entity or function; and/or Al/ML training policies for training, based on the proximal computing availability table, an AI/ML model.

According to various examples of embodiments, the apparatus may further comprise means for providing the proximal computing capability table and/or the proximal computing availability table to the source cloud based Radio Access network entity or function, and/or means for providing the proximal computing capability table and/or the proximal computing availability table to a consumer of the proximal computing capability table and/or the proximal computing availability table different from the source cloud based Radio Access network entity or function; and/or wherein the apparatus may further comprise means for providing the derived proximal computing capability table and/or the derived proximal computing availability table through at least one of the following interfaces: R1 services, or SMO NBI.

Further, according to various examples of embodiments, an apparatus may comprise means for applying a proximal computing table, which is a neighbour relation table based on capability and/or current availability of computing resources types of at least one target cloud based Radio Access network entity or function in a proximity of a source cloud based Radio Access network entity or function, means for determining the capability and/or current availability and/or predicted availability of computing resources types of the at least one target cloud based Radio Access network entity or function based on the applied proximal computing table; and based on the determination, means for managing computing resources of the source cloud based Radio Access network entity or function according to predetermined proximal computing table policies, wherein the managed computing resources are associated with an endpoint terminal, which is associated with the source cloud based Radio Access network entity or function.

According to various examples of embodiments, the proximal computing table may comprise a proximal computing capability table and/or a proximal computing availability table.

According to various examples of embodiments, the expression "means for" in combination with a certain function as outlined above, like e.g. "means for retrieving", may also be understood as "configured to" in combination with a certain function, like e.g. "configured to retrieve".

Furthermore, according to at least some examples of embodiments, there may be provided a computer program product for a computer, including software code portions for performing the steps of any of the above-outlined methods, when said product is run on the computer.

According to at least some examples of embodiments, in relation to the computer program product, the computer program product may include a computer-readable medium on which said software code portions are stored, and/or the computer program product may be directly loadable into the internal memory of the computer and/or transmittable via a network by means of at least one of upload, download and push procedures.

It should be appreciated that
- an access technology via which traffic is transferred to and from an entity in the communication network may be any suitable present or future technology, such as WLAN (Wireless Local Access Network), WiMAX (Worldwide Interoperability for Microwave Access), LTE, LTE-A, 5G, 6G, Bluetooth, Infrared, and the like may be used; additionally, examples of embodiments may also apply wired technologies, e.g. IP based access technologies like cable networks or fixed lines.
- examples of embodiments suitable to be implemented as software code or portions thereof and being run using a processor or processing function are software code independent and can be specified using any known or future developed programming language, such as a high-level programming language, such as objective-C, C, C++, C#, Java, Python, Javascript, other scripting languages etc., or a low-level programming language, such as a machine language, or an assembler.
- implementation of examples of embodiments is hardware independent and may be implemented using any known or future developed hardware technology or any hybrids of these, such as a microprocessor or CPU (Central Processing Unit), MOS (Metal Oxide Semiconductor), CMOS (Complementary MOS), BiMOS (Bipolar MOS), BiCMOS (Bipolar CMOS), ECL (Emitter Coupled Logic), and/or TTL (Transistor-Transistor Logic).
- examples of embodiments may be implemented as individual devices, apparatuses, units, means or functions, or in a distributed fashion, for example, one or more processors or processing functions may be used or shared in the processing, or one or more processing sections or processing portions may be used and shared in the processing, wherein one physical processor or more than one physical processor may be used for implementing one or more processing portions dedicated to specific processing as described,
- an apparatus may be implemented by a semiconductor chip, a chipset, or a (hardware) module including such chip or chipset;
- examples of embodiments may also be implemented as any combination of hardware and software, such as ASIC (Application Specific IC (Integrated Circuit)) components, FPGA (Field-programmable Gate Arrays) or CPLD (Complex Programmable Logic Device) components or DSP (Digital Signal Processor) components.
- examples of embodiments may also be implemented as computer program products, including a computer usable medium having a computer readable program code embodied therein, the computer readable program code adapted to execute a process as described in embodiments, wherein the computer usable medium may be a non-transitory medium.

The term "circuitry" may refer to one or more or all of the following examples of embodiments:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
hardware circuit(s) and or processor(s), such as a microprocessor(s) or a portion of a microprocessor(s), that requires software (e.g., firmware) for operation, but the software may not be present when it is not needed for operation."

This definition of circuitry applies to all uses of this term herein, including in any claims. As a further example, as used herein, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The term "non-transitory," as used herein, is a limitation of the medium itself (e.g., tangible, not a signal ) as opposed to a limitation on data storage persistency (e.g., RAM vs. ROM).

As used herein, "at least one of the following: " and "at least one of " and similar wording, where the list of two or more elements are joined by "and" or "or", mean at least any one of the elements, or at least any two or more of the elements, or at least all the elements.

Although the subject disclosure has been described herein before with reference to various examples of embodiments thereof, the subject disclosure is not limited thereto and it will be apparent to a person skilled in the art that various modifications can be made to the subject disclosure.

The following meanings for the abbreviations used herein apply:
- 3GPP: 3^{rd} Generation Partnership Project
- 3GGP2: 3^{rd} Generation Partnership Project 2
- 4G: Fourth Generation
- 5G: Fifth Generation
- 5GC: 5G Core Network
- 6G: Sixth Generation
- Al: Artificial Intelligence
- AP: Access Point
- API: Application Programming Interface
- BS: Base Station
- CDMA: Code Division Multiple Access
- CM: Configuration Management
- CNC: Computing and Network Convergence
- CPU: Central Processing Unit
- CU: Centralized Unit
- DPU: Data Processing Unit
- DU: Distributed Unit
- eNB: Evolved Node B
- ETSI: European Telecommunications Standards Institute
- gNB: Next Generation Node B
- GPU: Graphics Processing Unit
- HO: Handover
- IEEE: Institute of Electrical and Electronics Engineers
- ITU: International Telecommunication Union
- LTE: Long Term Evolution
- LTE-A: Long Term Evolution-Advanced
- MANETs: Mobile Ad-Hoc Networks
- MEC: Mobile Edge Computing
- ML: Machine Learning
- NB: Node B
- NBI: Northbound Interface
- NG-RAN: NG Radio Access Network
- NPU: Neural Processing Unit
- NR: New Radio
- NW: Network
- PM: Performance Management
- RAM: Random Access Memory
- RAN: Radio Access Network
- RIC: RAN Intelligent Controller
- ROM: Read Only Memory
- SMO: Service Management & Orchestrator
- SON: Self Organizing Networks
- TISPAN: Telecoms & Internet converged Services & Protocols for Advanced Networks
- UE: User Equipment
- UWB: Ultra-Wideband
- WCDMA: Wideband Code Division Multiple Access
- WiMAX: Worldwide Interoperability for Microwave Access
- WLAN: Wireless Local Area Network

## Claims

1. A method, comprising:
retrieving information comprising at least one of
configuration management, CM, data and performance management, PM, data of predetermined cloud based Radio Access network entities or functions, or
resource types in the predetermined cloud based Radio Access network entities or functions, or
capabilities of resource types in the predetermined cloud based Radio Access network entities or functions, or
location information of the predetermined cloud based Radio Access network entities or functions;
from the retrieved information and from among the predetermined cloud based Radio Access network entities or functions, deriving a proximal computing capability table for a source cloud based Radio Access network entity or function in a proximity of target cloud based Radio Access network entities or functions,
the derivation based on a proximity analysis of the predetermined cloud based Radio Access network entities or functions in relation to the source cloud based Radio Access network entity or function and further based on a capability analysis of computing resource types in the target cloud based Radio Access network entities or functions in the proximity of the source cloud based Radio Access network entity or function; and
providing the derived proximal computing capability table,
wherein the proximal computing capability table is a neighbour relation table indicative of computing resources types and/or capability of compute resource types of the target cloud based Radio Access network entities or functions in the proximity of the source cloud based Radio Access network entity or function.

2. The method according to claim 1, further comprising:
retrieving further information comprising at least one of
PM data of the predetermined cloud based Radio Access network entities or functions, or
an availability of computing resources types in the predetermined cloud based Radio Access network entities or functions;
from the retrieved further information and the proximal computing capability table, deriving a proximal computing availability table for the source cloud based Radio Access network entity or function in the proximity of the target cloud based Radio Access network entities or functions; and
providing the derived proximal computing availability table,
wherein the proximal computing availability table is a dynamic neighbour relation table indicative of current availability of computing resources types of the target cloud based Radio Access network entities or functions in the proximity of the source cloud based Radio Access network entity or function.

3. The method according to claim 1 or 2,
wherein the resource types indicated by the proximal computing capability table refer to at least one of
support for a neural processing unit,
support for a deep processing unit,
support for a graphical processing unit,
support for a Content-Addressable Memory, CAM,
support for a Artificial Intelligence, Al, accelerator, or
support for a Quantum Processing Unit, QPU; and/or
wherein the capability of resource types indicated by the proximal computing capability table refer to at least one of
supported CPU frequencies,
supported types of AI algorithms,
supported Graphics Memory,
supported number of Ray Tracing Cores, or
supported AI & Tensor Cores.

4. The method according to claim 2 or 3, wherein the current availability indicated by the proximal computing availability table comprises a predicted availability of the computing type resources for predetermined time periods.

5. The method according to any of claims 1 to 4, wherein the proximal computing capability table comprises the following information:
target node identifiers for the target cloud based Radio Access network entities or functions; and/or
resource types supported by the target cloud based Radio Access network entities or functions; and/or
capabilities of resource types; and/or
a last update time.

6. An apparatus, comprising
means for retrieving information comprising at least one of
configuration management, CM, data and performance management, PM, data of predetermined cloud based Radio Access network entities or functions, or
resource types in the predetermined cloud based Radio Access network entities or functions, or
capabilities of resource types in the predetermined cloud based Radio Access network entities or functions, or
location information of the predetermined cloud based Radio Access network entities or functions;
from the retrieved information and from among the predetermined cloud based Radio Access network entities or functions, means for deriving a proximal computing capability table for a source cloud based Radio Access network entity or function in a proximity of target cloud based Radio Access network entities or functions,
the derivation based on a proximity analysis of the predetermined cloud based Radio Access network entities or functions in relation to the source cloud based Radio Access network entity or function and further based on a capability analysis of computing resource types in the target cloud based Radio Access network entities or functions in the proximity of the source cloud based Radio Access network entity or function; and
means for providing the derived proximal computing capability table,
wherein the proximal computing capability table is a neighbour relation table indicative of computing resources types and/or capability of compute resource types of the target cloud based Radio Access network entities or functions in the proximity of the source cloud based Radio Access network entity or function.

7. The apparatus according to claim 6, further comprising:
means for retrieving further information comprising at least one of
PM data of the predetermined cloud based Radio Access network entities or functions, or
an availability of computing resources types in the predetermined cloud based Radio Access network entities or functions;
from the retrieved further information and the proximal computing capability table, means for deriving a proximal computing availability table for the source cloud based Radio Access network entity or function in the proximity of the target cloud based Radio Access network entities or functions; and
means for providing the derived proximal computing availability table,
wherein the proximal computing availability table is a dynamic neighbour relation table indicative of current availability of computing resources types of the target cloud based Radio Access network entities or functions in the proximity of the source cloud based Radio Access network entity or function.

8. The apparatus according to claim 6 or 7,
wherein the resource types indicated by the proximal computing capability table refer to at least one of
support for a neural processing unit,
support for a deep processing unit,
support for a graphical processing unit,
support for a Content-Addressable Memory, CAM,
support for a Artificial Intelligence, Al, accelerator, or
support for a Quantum Processing Unit, QPU; and/or
wherein the capability of resource types indicated by the proximal computing capability table refer to at least one of
supported CPU frequencies,
supported types of AI algorithms,
supported Graphics Memory,
supported number of Ray Tracing Cores, or
supported Al & Tensor Cores.

9. The apparatus according to claim 7 or 8, wherein the current availability indicated by the proximal computing availability table comprises a predicted availability of the computing type resources for predetermined time periods.

10. The apparatus according to any of claims 6 to 9, wherein the proximal computing capability table comprises the following information:
target node identifiers for the target cloud based Radio Access network entities or functions; and/or
resource types supported by the target cloud based Radio Access network entities or functions; and/or
capabilities of resource types; and/or
a last update time.

11. The apparatus according to any of claims 7 to 10, wherein the proximal computing availability table comprises the following information:
target node identifiers for the target cloud based Radio Access network entities or functions;
actual and/or predicted availability for supported resources types in the target cloud based Radio Access network entities or functions; and/or
a last update time.

12. The apparatus according to any of claims 6 to 11, wherein policies related to the proximal computing capability table comprise at least one of
handover policies for selecting, based on the proximal computing capability table, one target cloud based Radio Access network entity or function from among the target cloud based Radio Access network entities or functions with required resource types to handover an endpoint terminal; and/or
offloading policies for offloading, based on the proximal computing capability table, endpoint terminal related traffic to a selected target cloud based Radio Access network entity or function from among the target cloud based Radio Access network entities or functions with required resource types; and/or
traffic steering policies for steering, based on the proximal computing capability table, a traffic among the endpoint terminal and/or the target cloud based Radio Access network entities or functions and/or the source cloud based Radio Access network entity or function; and/or
spectrum sharing policies for sharing, based on the proximal computing capability table, a spectrum among the target cloud based Radio Access network entities or functions and/or the source cloud based Radio Access network entity or function; and/or
AI/ML training policies for training, based on the proximal computing capability table, an AI/ML model.

13. The apparatus according to any of claims 7 to 12, wherein policies related to the proximal computing availability table comprise at least one of
handover policies for selecting, based on the proximal computing availability table, one target cloud based Radio Access network entity or function from among the target cloud based Radio Access network entities or functions with currently and/or predictively available resource types to handover an endpoint terminal; and/or
offloading policies for offloading, based on the proximal computing availability table, endpoint terminal related traffic to a selected target cloud based Radio Access network entity or function from among the target cloud based Radio Access network entities or functions with currently and/or predictively available resource types; and/or
traffic steering policies for steering, based on the proximal computing availability table, a traffic among the endpoint terminal and/or the target cloud based Radio Access network entities or functions and/or the source cloud based Radio Access network entity or function; and/or
spectrum sharing policies for sharing, based on the proximal computing availability table, a spectrum among the target cloud based Radio Access network entities or functions and/or the source cloud based Radio Access network entity or function; and/or
AI/ML training policies for training, based on the proximal computing availability table, an AI/ML model.

14. The apparatus according to any of claims 7 to 13,
further comprising:
means for providing the proximal computing capability table and/or the proximal computing availability table to the source cloud based Radio Access network entity or function, and/or
means for providing the proximal computing capability table and/or the proximal computing availability table to a consumer of the proximal computing capability table and/or the proximal computing availability table different from the source cloud based Radio Access network entity or function; and/or
wherein the apparatus further comprises means for providing the derived proximal computing capability table and/or to provide the derived proximal computing availability table through at least one of the following interfaces: R1 services, or SMO NBI.

15. A computer program product for a computer, including software code portions for performing the steps of any of claims 1 to 5, when said product is run on the computer.
